# EUROPEAN PATENT APPLICATION

(11) **EP 0 920 171 A2**
(43) Date of publication of application: **02.06.1999**
(21) Application number: 98309549.8
(22) Date of filing: 23.11.1998
(51) Int. Cl.: H04M 1/65, H04M 1/72

(54) **Voice recording for a telephone apparatus**

(30) Priority: 26.11.1997 JP 324371/97
(71) Applicant: SONY CORPORATION, Tokyo (JP)
(72) Inventor: Komiya, Kozo, Shinagawa-ku, Tokyo (JP)
(74) Representative: Ayers, Martyn Lewis Stanley

(57) **Abstract**

The present invention relates to a telephone apparatus, and realizes a telephone apparatus with improved convenience, which is capable of recording the contents of a conversation during a call with a simple configuration. Control means 14 is provided for comparing the information in encoded voice data to be transmitted with the information in received encoded voice data from a companion to sequentially select and store one having a larger amount of information, thereby making it possible to store the contents of a conversation during a call with a simple configuration.

## Description

The present invention relates to a telephone apparatus and a voice recording method which may be applied, for example, to a portable telephone in a digital cellular telephone system employing a code division multiple access (CDMA) method.

In a digital cellular telephone system, an area provided with communication services is divided into cells of a desired size, in each of which a base station is installed as a fixed radio station, and a portable telephone serving as a mobile station wirelessly communicates with the base station in a cell where the telephone exists. While a variety of methods have been proposed as communication methods between a portable telephone and a base station for such systems, a representative one is a code division multiple access method referred to as a CDMA method. In this CDMS method, a spread code multiplied by transmission data is changed for each channel in order to provide multiple channels in the same band. Details on the CDMA method has been standardized by Telecommunications Industry Association (TIA)/Electronic Industries Association (EIA), and summed up as IS-95 standard.

Some portable telephones of this kind are provided with the ability to record voices during a call (hereinafter, this function is referred to as the voice memo function). With a portable telephone having such a voice memo function, voices during a call can be reproduced at a later time for listening again, so that important matters can be readily confirmed at a later time without taking notes on paper or the like as has been conventionally done.

Typically, portable telephone having such a voice memo function digitizes a audio signal, compress-encodes the digitized voice data, and stores the encoded voice data in a memory. For reproduction, the voice data read from the memory is decompress-decoded and output. Accordingly, the amount of information of the voice data to be stored can be reduced, so that voice of longer period of time can be recorded with a limited capacity of memory.

A digital portable telephone compress-encodes a audio signal for a transmission after digitizing. Thus, the voice memo function is realized by utilizing an analog-to-digital converter and a compress-encoder provided for transmission in order to generate compressed voice data, and by utilizing a decompress-decoder and a digital-to-analog converter provided for reception so as to reproduce a audio signal.

Audio signals to be recorded may be classified into two categories. One is a audio signal of the user who speaks with using a portable telephone, and the other is a received audio signal of the companion. For recording only the audio signal of the user, voice data of the user is compress-encoded and stored in a memory, and when reproduction, the voice data stored in the memory is read and decompress-decoded. Thus, a portable telephone having a voice memo function for recording the voice of the user can be readily realized. On the other hand, for recording only a audio signal of the companion, voice data compress-encoded and transmitted from the companion is stored in a memory, and the voice data stored in the memory is read and decompress-decoded for reproduction. Thus, a portable telephone having a voice memo function for recording the voice of the companion can be readily realized.

If a conventional portable telephone as mentioned above is capable of recording both the voice of a user and the voice of a companion, a conversation between the two parties can be recorded as it is. Therefore, it seems possible to significantly improve convenience by largely facilitating the understanding of important matters in the conversation during reproduction compared with the case of recording the voice of only one part. Such a voice memo function could be realized as follows: Recording the voices of the two parties can be readily realized by storing voice data of the companion and the user respectively in a memory; and for reproduction, the two kinds of voice data stored in the memory are individually read, decompress-decoded, and then combined for outputting.

However, if one were to use a configuration which simply stores voice data of the two parties in a memory and reads and outputs them when reproduction, the memory capacity must be doubled as compared with the case of storing voice data of only one party. That is, inevitably the circuit scale should be enlarged and configuration must be more complicated.

Also in reproduction, since the respective voice data must be read and decompress-decoded, two decompress-decoders should be arranged in parallel. In this respect, that also leads to an inevitable enlargement in the circuit scale. In stead of arranging two decompress-decoders, a decompress-decoder having an improved performance with a higher speed is also considered to be employed, so that the respective voice data is decoded by the single decompress-decoder in a time division manner. However, the higher performance of the decompress-decoder should requires the more complicated control, and could also cause new additional problems such as an increase in consumed power.

A telephone apparatus comprises compress-encoding means for compress-encoding inputted voice data, transmitting means for transmitting encoded voice data outputted from said compress-encoding means to an companion, receiving means for receiving a transmission signal from the companion, decompress-decoding means for decompress-decoding and outputting received encoded voice data outputted from said receiving means, storing means for storing said encoded voice data and/or said received encoded voice data, and control means for comparing said information in said encoded voice data with the information in said received encoded voice data in order to sequentially select and store one having larger information in said storing means. Further, a voice recording method for a telephone apparatus adapted to record voices during a call compares the information in encoded voice data generated by compress-encoding inputted voice data with the information in received encoded voice data from an companion, and sequentially selects and stores one having larger information.

Embodiments of this invention can provide a telephone apparatus and a voice recording method which are capable of recording the contents of a conversation during a call with a simple configuration.

The nature, principle and utility of the invention will become more apparent from the following detailed description of preferred embodiments given by way of non-limitative example with reference to the accompanying drawings in which like parts are designated by like reference numerals or characters and in which:
Fig. 1 is a block diagram illustrating the configuration of a portable telephone according to an embodiment of the present invention;
Fig. 2 is a table used for explaining the operation of variable length encoding with a voice encoder;
Fig. 3 is a schematic diagram showing a data structure for encoded voice data; and
Fig. 4 is a flow chart illustrating an operational procedure when a voice is recorded.

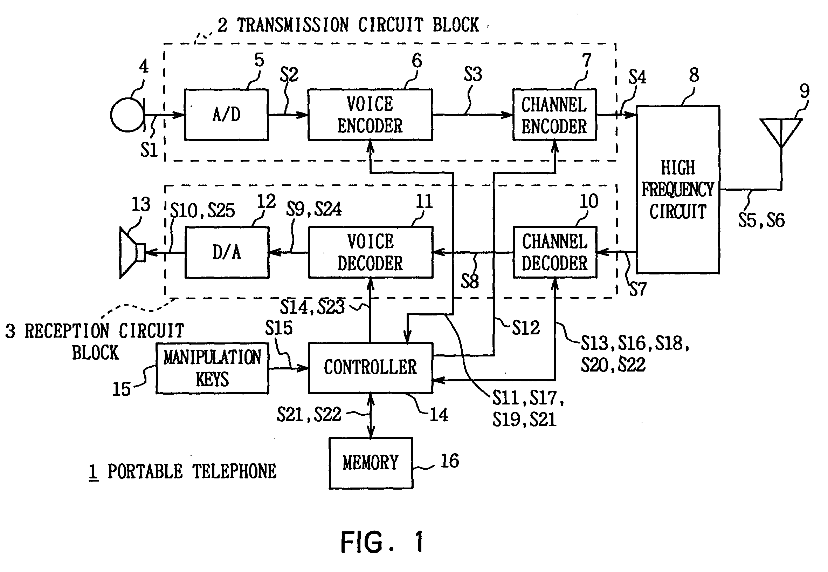

In Fig. 1, reference numeral 1 generally shows a portable telephone being applied to the present invention, having a transmission circuit block 2 and a reception circuit block 3. During a call, a audio signal S1 of a user inputted from a microphone 4 is supplied to an analog-to-digital (A/D) converter 5. The analog-to-digital converter 5 analog-to-digital converts the audio signal S1, and outputs the resulting voice data S2 to a voice encoder 6.

The voice encoder 6 sequentially transforms the inputted voice data S2 into blocks for a predetermined bits (hereinafter, this block is referred to as the frame), and sequentially compress-encodes the voice data S2 by the frame at a desired transmission rate in order to generate encoded voice data S3 which is outputted to a channel encoder 7 at a subsequent stage.

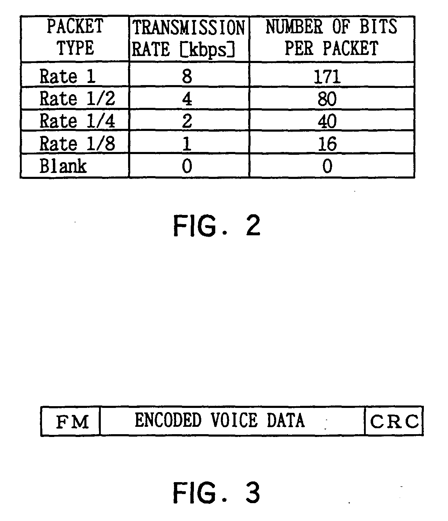

This voice encoder 6 performs the compress-encoding with employing a variable length coding method referred to as Qualcomm Code Excited Linear Predictive Coding (QCELP), which has been standardized by TIA/EIA/IS-96B, as a compress coding method. The coding method according to QCELP is a method which selects a desired transmission rate for each frame among a plurality of previously selected transmission rates in accordance with a voice quality (specifically, voice energy) of inputted voice data, and variable-length-encodes the voice data at the selected transmission rate. Specifically, as illustrated in Fig. 2, the voice encoder

6 employing the QCELP method treats a 20ms portion of voice data S2 as one frame, and selects a desired transmission rate from five options (8, 4, 2, 1, 0 kbps) in accordance with the voice energy of the voice data in each frame. Then, the voice encoder 6 variable-length-encodes the voice data in the frame at the selected transmission rate so as to represent the voice data in each frame with the corresponding number of bits among the five optional numbers of bits (171, 80, 40, 16, 0), and packetizes the voice data as encoded voice data S3 to be outputted.

In this way, the voice encoder 6 variable-length-encodes the voice data S2 by the frame so as to generate the encoded voice data S3 of a corresponding packet type to the voice energy of each frame among five optional types of packets (rate 1, 1/2, 1/4, 1/8, and blank), and outputs the encoded voice data S3 to the channel encoder 7 at a subsequent stage.

As described above, by performing the encoding in the voice encoder 6, for example, voice data S2 when the user is actually speaking is compress-encoded, at a higher transmission rate, whereas voice data S2 comprising only background noise is compress-encoded at a lower transmission rate.

As illustrated in Fig. 3, the channel encoder 7 adds a frame mode bit (FM), which is information indicating a transmission rate and the number of bits of a packet, to the head of each packet of the encoded voice data S3. Then, the channel encoder 7 adds an error detecting bit referred to as cyclic redundancy check (CRC) to the end of each packet, and applies convolution encoding, interleaving, Walsh code modulation processing, and spread modulation processing using a pseudo-random noise code (PN code) to the resulting block encoded data. As a result, a transmission signal S4 is generated and then outputted to a high frequency circuit 8 at a subsequent stage.

The high frequency circuit 8, composed of a transmission circuit and a reception circuit, frequency-converts the inputted transmission signal S4 to a transmission signal of a predetermined band by the internal transmission circuit. Successively, the high frequency circuit 8 applies power amplification to the frequency-converted transmission signal in order to generate a transmission signal S5 to be supplied to an antenna 9. Whereby, the transmission signal S5 indicative of the audio signal S1 captured from the microphone 4 during a call is transmitted from the antenna 9 to a base station.

On the other hand, a signal transmitted from a base station during a call, is received by the antenna 9, and inputted to the high frequency circuit 8 as a reception signal S6. The reception circuit in the high frequency circuit 8 frequency-converts the reception signal S6 to an intermediate frequency signal S7 of a predetermined band, which is outputted to a channel decoder 10.

The channel decoder 10 applies data processing such as despreading by using a PN code, deinterleaving, Viterbi decoding, and so on, to the intermediate frequency signal S7 by the frame. Thereby, the decoder 10 reproduces encoded voice data S8 transmitted from the companion, and outputs the encoded voice data S8 to a voice decoder 11. The encoded voice data S8 has been encoded by the compress coding method according to QCELP, when transmitted from the companion, and therefore has a substantially similar data structure to that of the encoded voice data S3 outputted from the voice encoder 6.

The voice decoder 11 sequentially decompress-decodes the variable-length-encoded voice data S8 by the frame in order to reproduce voice data S9 of the companion, which is outputted to a digital-to-analog converter (D/A) 12. The digital-to-analog converter 12 digital-to-analog converts the voice data S9 to recover a audio signal S10 of the companion, which is outputted from a speaker 13. Thus, the voice of the companion can be listened via the speaker 13.

The portable telephone 1 is provided with a controller 14 as a control means, which outputs control signals S11, S12, S13 and S14 to respective circuits (6, 7, 10 and 11) of the transmission circuit block 2 and the reception circuit block 3 so as to control the respective circuits. Thereby, the transmission operation and the reception operation are operated as described above, as well as controlling a variety of other operations.

The controller 14 is connected with manipulation keys 15 comprising a call start key, a call end key, a memo recording/reproducing key, numeral keys, and so on. When the user manipulates any of the manipulation keys 15, the controller 14 receives manipulation information S15 based on the manipulation, and performs the processing corresponding to the manipulation information S15. For example, when telephone number information is inputted via numeral keys together with a call initiating instruction via the call start key, call initiating processing is performed for the telephone number. On the other hand, when the end of conversation is instructed via the call end key, a communication line is disconnected so as to finish the call. When a voice recording instruction is inputted via the memo recording/reproducing key, voice data of the companion and the user is recorded in a memory 16. When a reproduction instruction is inputted via the memo recording/reproducing key, recorded voice data is read from the memory 16 and outputted.

The processing performed when the voice memo function is instructed via the memo recording/reproducing key is specifically described below. When a voice recording instruction is inputted via the memo recording/reproducing key, the controller 14 compares the information in encoded voice data S3 of the user with the information in encoded voice data S8 transmitted from the companion. Then, the controller 14 sequentially selects one of the encoded voice data S3 or S8 having more information at the current time for storage in the memory 16. Generally, in a conversation, when one is speaking, the other is most likely to chime in briefly, and both parties seldom speak simultaneously. Therefore, even if recording is performed as above, the contents of the conversation between both parties can be sequentially stored in the memory 16. Also, in reproduction, voice data in the memory 16 can be sequentially read and outputted in the storing order to reproduce the conversation between both parties without awkwardness, since the voice data in the memory 16 is stored along the flow of the conversation.

In this event, when comparing the encoded voice data S3 and S8, the controller 14 firstly detects frames of the encoded voice data S3 and S8 in response to a voice recording instruction, as data is to be compared by the frame. In this portable telephone 1, the channel decoder 10 receives one frame of encoded voice data S8 from an intermediate frequency signal S7, and outputs frame reception information S16 indicative of the data S8 to the controller 14. Therefore, the controller 14 can detect frames of the encoded voice data S3 and S8 by monitoring the frame reception information S16.

Upon detecting frames based on the frame reception information S16, the controller 14 outputs a transmission packet type read signal S17 to the voice encoder 6, and outputs a reception packet type read signal S18 to the channel decoder 10. The voice encoder 6, which receives the signal S17, detects a transmission frame corresponding to a reception frame detected by using the frame reception information S16, according to the transmission packet type read signal S17. Then, the voice encoder 6 outputs transmission packet type information S19 indicating the packet type of the transmission frame to the controller 14. Similarly, the channel decoder 10 detects a packet type from a frame mode bit added to the head of the reception frame detected by using the frame reception information S16 according to the reception packet type read signal S18. Then, the decoder 10 outputs reception packet type information S20 indicating the packet type to the controller 14.

The controller 14 detects a transmission rate on the transmission side (hereinafter referred to as an outgoing transmission rate) based on the transmission packet type information S19 supplied from the voice encoder 6. Also, the controller 14 detects a transmission rate on the reception side (hereinafter, referred to as an incoming transmission rate) based on the reception packet type information S2 supplied from the channel decoder 10. Then, the controller 14 compares the detected outgoing transmission rate with the detected incoming transmission rate.

As a result, when the outgoing transmission rate is higher than the incoming transmission rate, the controller 14 reads encoded voice data S21 of the frame, the transmission rate of which was compared, from the voice encoder 6. Then, the controller 14 writes the encoded voice data S21 into the memory 16 for storage. Conversely, if the outgoing transmission rate is not higher than the incoming transmission rate (including the case of outgoing transmission rate equaling to the incoming transmission rate), the controller 14 reads encoded voice data S22, the transmission rate of which was compared, from the channel decoder 10. Then, the controller 14 writes the encoded voice data S22 into the memory 16 for storage. Subsequently, the controller 14 repeats the above-described operations sequentially by the frame in order to sequentially write the encoded voice data S21 of the user provided from the voice encoder 6, or the encoded voice data S22 of the companion provided from the channel decoder 10, into the memory 16 for storage.

On the other hand, when a reproduction instruction is inputted via the memo recording/reproducing key, the controller 14 sequentially reads encoded voice data S21 and S22 stored in the memory 16 in the storing order. Then, the controller 14 outputs those data to the voice decoder 11 as reproduced encoded voice data S23. The voice decoder 11 decompress-decodes the reproduced encoded voice data S23, and outputs the resulting reproduced voice data S24 to the digital-to-analog converter 12. The digital-to-analog converter 12 digital-to-analog converts the reproduced voice data S24, and outputs the resulting reproduced audio signal S25 from the speaker 13. In this way, the conversation between the user and the companion can be listened via the speaker 13.

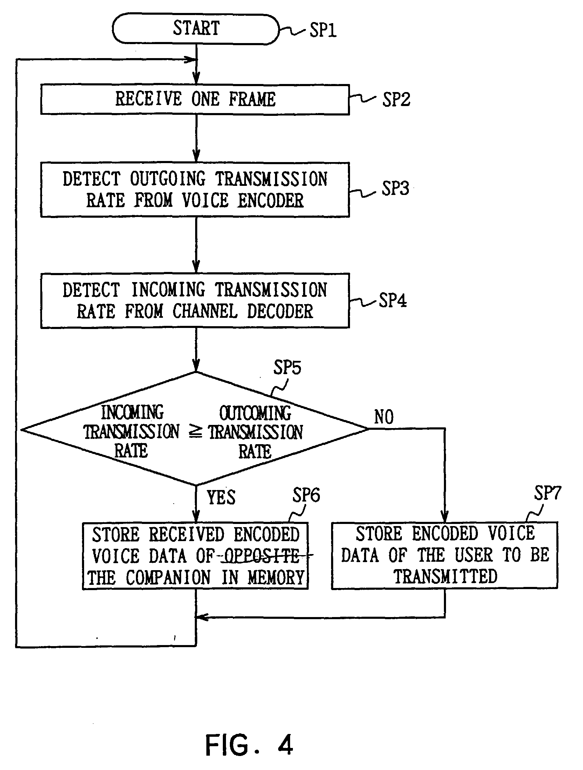

The voice recording by the controller 14 is described with reference to a flow chart illustrated in Fig. 4. First, at step SP2 following step SP1, the controller 14 detects that one frame of encoded voice data S8 is acquired in the channel decoder 10 based on frame reception information S16 supplied from the channel decoder 10.

Next, at step SP3, the controller 14 reads from the voice encoder 6 transmission packet information S19 of a transmission frame corresponding to a reception frame when frame reception information S16 is detected, and detects an outgoing transmission rate based on the transmission packet information S19. Further, at step SP4, the controller 14 reads from the channel decoder 10 reception packet information S20 of a reception frame when the frame reception information S16 is detected, and detects an incoming transmission rate based on the reception packet information S20.

Then, at step SP5, the controller 14 compares the incoming transmission rate with the outgoing transmission rate. As a result, if the incoming transmission rate is higher than the outgoing transmission rate, or if the incoming transmission rate is equal to the outgoing transmission rate, the controller 14 proceeds to step SP6. Conversely, if the incoming transmission rate is lower than the outgoing transmission rate, the controller 14 proceeds to step SP17.

At step SP6, the controller 14 reads received encoded voice data S22 of the companion from the channel decoder 10, and writes the encoded voice data S22 into the memory 16 for storage. On the other hand, at step SP7, the controller 14 reads encoded voice data S21 of the user to be transmitted from the voice encoder 6, and writes the encoded voice data S21 into the memory 16 for storage. After completing this processing, the controller 14 returns to step SP2, and subsequently repeats the same processing each time the next frame is received, to record the encoded voice data S21 of the user to be transmitted and the received encoded voice data S22 of the companion.

In the foregoing configuration, the portable telephone 1 variable-length-encodes the voice data S2 of the user by the voice encoder 6. In this event, the voice encoder 6 selects a desired transmission rate in accordance with the voice energy of the voice data S2, and variable-length-encodes the voice data S2 at the selected transmission rate. On the other hand, encoded voice data S8 sent from the companion is also variable-length-encoded by the same voice encoder.

In case of such variable length encoding being performed, voice data is encoded at a higher transmission rate and encoded with a larger number of bits when a speaker is speaking. Whereas, the voice data is encoded at a lower transmission rate and encoded with a smaller number of bits when the speaker is silent and voice data is formed only of background noises.

Generally, in a conversation, when one is speaking, the other is most likely to chime in briefly and both parties seldom speak simultaneously. Taking this aspect into consideration, it is possible to readily detect who is speaking by comparing the transmission rate of encoded voice data S3 to be transmitted with the transmission rate of encoded voice data S8 received from the companion. Therefore, the conversation can be almost correctly reproduced by selecting encoded voice data having a higher transmission rate and by connecting such selected encoded voice data one after the other.

In the portable telephone 1, the controller 14 examines the packet type of encoded voice data S3 for transmitting and also the packet type of received encoded voice data S8 of the companion so as to reveal their respective transmission rates. Then, the controller 14 compares the revealed transmission rates to detect who is speaking, the user or the companion. Then, as a result of the comparison, the encoded voice data S3 (encoded voice data S21) or the encoded voice data S8 (encoded voice data S22), which appears to be a leading speaker's is sequentially selected and stored in the memory 16.

By performing such voice recording, essential portions as a conversation are preferentially selected and stored in the memory 16 while unnecessary portions such as silent portions are fairly discarded. Further, such essential conversation portions are stored in the time order. In reproduction, encoded voice data S23 is sequentially read from the memory 16 and decompress-decoded by the voice decoder 11 in order to readily reproduce the conversation.

Encoded voice data S3 of the user could rarely have the same transmission rate as that of received encoded voice data S8 of the companion. In this case, however, since the encoded voice data S8 of the companion is selected and stored in consideration of the importance that should be placed on the user and the companion, the contents spoken by the companion can be all recorded to refrain any important matters from dropping.

In this way, the portable telephone 1 selects the one having a higher transmission rate from the encoded voice data S3 of the user side and the encoded voice data S8 of the companion by the frame, and stores the selected one in the memory 16. Since only one of the encoded voice data S3, and S8 need to be stored, it is possible to reduce a required memory capacity as compared with the case of simply storing each encoded voice data, and to refrain the circuit scale from being increased.

Also, since the portable telephone 1 only stores data having a higher transmission rate from the encoded voice data S3 of the user and the encoded voice data S8 of the companion in the memory 16, the conversation can be reproduced only by reading data stored in the memory 16 in sequence during reproduction. Thus, the portable telephone 1 needs not to newly add another voice decoder or to operate the voice decoder twice at a high rate, as is the case of simply storing and reproducing both encoded voice data on the user side and encoded voice data on the companion side. Thereby it is possible to refrain from problems such as increases in the circuit scale and power consumption, and so on.

According to the foregoing configuration, encoded voice data with a higher transmission rate is sequentially selected from the encoded voice data S3 of the user and the encoded voice data S8 of the companion and stored in the memory 16. Therefore, portions actually required in a conversation can be preferentially recorded while discarding unnecessary portions. Thus, it is possible to realize a portable telephone 1 with improved, which is capable of recording the contents of a conversation during a call with a simple configuration. While the foregoing embodiment has been described for the case where the QCELP method is applied as a compress coding method, the present invention is not limited to this method. Alternatively, the same effects can also be provided with applying to a variable rate coding method, for example, such as an enhanced variable rate code (RVRC) method standardized by TIA/EIA/IS-127, which variable-length-encodes voice data in predetermined data units at a desired transmission rate according to the voice energy.

Also, in the foregoing embodiment, the transmission rate of encoded voice data S3 to be transmitted is compared with the transmission rate of received encoded voice data S8 of the companion by frame so as to detect data that includes a speech. The present invention, however, is not limited to this way of detection. Alternatively, the numbers of bits can be compared between the encoded voice data S3 to be transmitted and the received encoded voice data S8 of the companion based on frame mode bits so as to detect data that includes a speech. In essence, the same effects can be provided when data having larger information is selected for storage from the encoded voice data to be transmitted and the received encoded voice data.

Further, in the foregoing embodiment, the transmission rate of the encoded voice data S3 to be transmitted is compared with the transmission rate of the received encoded voice data S8 from the companion in order to select and store the one having the higher transmission rate. The present invention, however, is not limited to this. Alternatively, the information in the encoded voice data to be transmitted can be compared with the information in the received encoded voice data from the companion in order to select the data with larger information. Further, either of the data would not be stored if both of the encoded voice data have smaller information than predetermined threshold value. In this way, it is possible to completely eliminate silent portions and further reduce a required memory capacity.

Further, while the foregoing embodiment has been described with regard to a portable telephone 1 employing the CDMA method to which the present invention is applied, the present invention is not limited to this method. Alternatively and additionally, the present invention can be applied to a portable telephone which employs any other method such as a time division multiple access (TDMA) method or the like. Even not limited to this, the present invention can be widely applied to other telephone apparatuses as long as they perform compress encoding in which the information in encoded voice data varies depending on whether or not a speaker is speaking.

According to the present invention as described above, the information in encoded voice data to be transmitted is compared with the information in received encoded voice data from the companion to sequentially select one having a larger amount of information, thereby making it possible to store the contents of a conversation during a call with a simple configuration. While there has been described in connection with the preferred embodiments of the invention, it will be obvious to those skilled in the art that various changes and modifications may be aimed, therefore, to cover in the appended claims all such changes and modifications as fall within the true scope of the invention.

## Claims

1. A telephone apparatus comprising:
compress-encoding means (6) for compress-encoding input voice data;
transmitting means (8) for transmitting encoded input voice data outputted from said compress-encoding means to an companion;
receiving means (8) for receiving a transmission signal;
decompress-decoding means (11) for decompress-decoding and outputting received encoded voice data outputted from said receiving means;
storing means (16) for storing said encoded voice data and/or said received encoded voice data; and
control means (14) for comparing the information in said encoded input voice data with the information in said received encoded voice data in order sequentially to select the one of the encoded input voice data and the received encoded voice data having more information and cause it to be stored in said storing means.

2. A telephone apparatus according to claim 1, wherein:
upon receiving manipulation information indicating a recording instruction from predetermined manipulating means, said control means (14) is arranged to compare the information in said encoded input voice data with the information in said received encoded voice data in order sequentially to select the one having more information and cause it to be stored in said storing means (16); and
upon receiving manipulation information indicating a reproduction instruction from said manipulating means, said control means (14) is arranged to cause said encoded input voice data and/or said received encoded voice data stored in said storing means (16) to be read in the order in which it is stored and to cause the read data to be decompress-decoded by said decompress-decoding means.

3. A telephone apparatus according to claim 1 or 2, wherein said control means (14) is arranged to select said received encoded voice data when said encoded input voice data has information equal to that of said received encoded voice data, and to cause said received encoded voice data to be stored in said storing means.

4. A telephone apparatus according to any one of the preceding claims wherein said encoded input voice data and said received encoded voice data are variable-length-encoded data.

5. A telephone apparatus according to any one the preceding claims, wherein said control means is arranged to compare the information in said encoded input voice data with the information in said received encoded voice data based on the transmission rates thereof or on the numbers of bits thereof in predetermined units.

6. A voice recording method for a telephone apparatus adapted to record voices during a call, comprising comparing the information in encoded input voice data generated by compress-encoding input voice data with the information in received encoded voice data, and sequentially selecting and storing the one of the encoded input voice data and the received encoded voice data having more information.

7. The voice recording method according to claim 6, wherein said received encoded voice data is selected and stored when said encoded input voice data has information equalling to that of said received encoded voice data.

8. The voice recording method according to claim 6 or 7, wherein said encoded voice data and said received encoded voice data are variable-length-encoded data.

9. The voice recording method according to any one of claims 6 to 8, wherein the information in said encoded input voice data is compared with the information in said received encoded voice data based on transmission rates thereof of on the numbers of bits thereof in predetermined units.
